# EUROPÄISCHE PATENTANMELDUNG

(11) **EP 2 636 293 A1**
(43) Veröffentlichungstag der Anmeldung: **11.09.2013**
(21) Anmeldenummer: 13401016.4
(22) Anmeldetag: 26.02.2013
(51) Int. Cl.: A01C 7/04, A01C 7/08

(54) **Pneumatische Einzelkornsämaschine**

(30) Priorität: 06.03.2012 DE 102012101842
(71) Anmelder: Amazonen-Werke H. Dreyer GmbH & Co. KG, 49205 Hasbergen (DE)
(72) Erfinder: Mertens, Daniel, 26135 Oldenburg (DE); Wilken, Martin, 26123 Oldenburg (DE)

(57) **Zusammenfassung**

Pneumatische Sämaschine mit mittels Überdruck durch ein pneumatisches Fördersystem beaufschlagten und in einem Gehäuse (1) angeordneten Dosierorgan, insbesondere Vereinzelungsorgan, wobei aus Öffnungen des Gehäuses (1) aufgrund des Überdrucks, insbesondere mit Staubpartikeln und/oder Beizmittelpartikeln vermengte und/oder verschmutzte Luft austritt, wobei vor den Öffnungen zumindest eine die aus den Öffnungen austretende besagte Luft einfangende und mit zumindest einer Auffangleitung (6) verbundene Auffangeinrichtungen (5) angeordnet ist. Um mit einfachen Mitteln eine Verbesserung des Wirkungsgrades bei der Erzeugung der Druckdifferenz an den Vereinzelungsöffnungen zur Vereinzelung der Saatkörner zu erreichen, ist vorgesehen, dass in der Auffangleitung (6) zumindest ein, vorzugsweise einstellbares Drosselelement (7) angeordnet ist.

## Beschreibung

Die Erfindung betrifft eine pneumatische Sämaschine gemäß des Oberbegriffes des Patentanspruches 1.

Eine derartige pneumatische Sämaschine ist in der DE 10 2008 037 782 A1 beschrieben. Diese pneumatische Sämaschine weist eine Vereinzelungstrommel mit Vereinzelungsöffnungen auf. Der Vorratsbehälter wird mit einem Überdruck beaufschlagt. Hierdurch werden gleichzeitig die Vereinzelungsöffnungen der Vereinzelungstrommel im Vereinzelungsbereich der Trommel mit einer Druckdifferenz beaufschlagt, so dass sich an den Vereinzelungsöffnungen, wenn diese durch den Saatgutvorrat geführt werden, Saatkörner anlagern. Hierbei dichten die Saatkörner die Vereinzelungsöffnungen nicht vollständig ab, so das Druckluft aus dem Vorratsbehälter durch die nicht von den Saatkörnern unvollständig abgedeckten Vereinzelungsöffnungen in das Trommelinnere der Vereinzelungstrommel gelangen. Diese Leckluft wird von der vor der Seitenöffnung der Vereinzelungstrommel angeordneten Auffangvorrichtung aufgefangen. Somit ist diese Auffangeinrichtung den Vereinzelungsöffnungen zugeordnet und kann die aus den Vereinzelungsöffnungen austretende Luft einfangen. Der Auffangvorrichtung ist eine Auffangleitung zugeordnet. Die Ausgangsöffnung der Auffangleitung ist so angeordnet, dass die aufgefangene Luft zum Boden leitbar ist. Hierzu wird gemäß des dortigen Ausführungsbeispiels die aufgefangene Luft über die Auffangleitung über eine Einschleuseinrichtung in das Steigrohr, welches zu einem Verteilerkopf führt, eingeleitet. Durch die austretende Leckluft ergibt sich ein schlechter Wirkungsgrad bei der Erzeugung der Druckdifferenz. Der Erfindung liegt die Aufgabe zu Grunde, mit einfachen Mitteln eine Verbesserung des Wirkungsgrades bei der Erzeugung der Druckdifferenz an den Vereinzelungsöffnungen zur Vereinzelung der Saatkörner zu erreichen.

Diese Aufgabe wird erfindungsgemäß dadurch gelöst, dass in der Auffangleitung zumindest ein, vorzugsweise einstellbares Drosselelement angeordnet ist.

Infolge dieser Maßnahme wird durch das in der Auffangleitung angeordnete Drosselelement ein Staudruck im Innenraum der Vereinzelungstrommel erzeugt. Hierdurch wird die Leckluft zwischen den Saatkörnern und den Vereinzelungsöffnungen verringert. Hierdurch wird der Luftdruck im Vorratsbehälter und auf der Vereinzelungsseite der Vereinzelungstrommel erhöht. Der erhöhte Luftdruck im Vorratsbehälter wirkt sich vorteilhaft auch für die Förderung der Saatkörner in der Saatleitung nach dem Vereinzeln der Saatkörner bis zu deren Ablage im Boden aus. Es wird eine erhöhte Fördergeschwindigkeit mit erhöhtem Luftdruck für die Saatkörner nach dem Vereinzeln in der Saatleitung erreicht.

Eine einfache Ausgestaltung des Drosselelementes lässt sich dadurch erreichen, dass das Drosselelement als Drosselventil ausgebildet ist.

Eine vorteilhafte Ausgestaltung des Drosselelementes lässt sich dadurch erreichen, dass das Drosselventil klappenartig ausgebildet ist.

Eine sehr einfache Ausgestaltung des Drosselelementes ergibt sich dadurch, dass das Drosselelement als verengter Leitungsbereich der Auffangleitung ausgebildet ist.

Eine Erhöhung des Luftdruckes im Vorratsbehälter auf der Vereinzelungsseite der Vereinzelungstrommel lässt sich dadurch erreichen dass mittels des Drosselelementes ein Staudruck zwischen dem Dosierorgan und dem Drosselventil erzeugbar ist.

Um den Wirkungsgrad der Sämaschine zu erhöhen und die verunreinigte Luft im System zu halten, ist vorgesehen, dass die Auffangleitungen in das pneumatische Fördersystem über eine Einschleuseinrichtung einmünden.

Um den Wirkungsgrad der Vereinzelungsvorrichtung zu erhöhen ist vorgesehen, dass das pneumatische Fördersystem zumindest ein motorisch angetriebenes Gebläse aufweist, dass die Auffangleitungen in die Saugseite des Gebläses ausmünden.

Weitere Einzelheiten der Erfindung sind der Beispielsbeschreibung zu entnehmen. Die Zeichnungen zeigen
- Fig.1: eine pneumatische Einzelkornsämaschine mit der erfindungsgemäßen Auffangeinrichtung in perspektivischer Darstellung,
- Fig.2: die Einzelkornsämaschine gemäß Fig. 1 in der Vorderansicht,
- Fig.3: die Einzelkornsämaschine gemäß Fig. 1 in Seitenansicht,
- Fig.4: das der Auffangeinrichtung zugeordnete Drosselelement in perspektivischer Darstellung und im Teilschnitt und im vergrößerten Maßstab,
- Fig.5: eine pneumatische Einzelkornsämaschine mit einer weiteren erfindungsgemäßen Auffangeinrichtung in perspektivischer Darstellung,
- Fig.6: eine pneumatische Einzelkornsämaschine mit der erfindungsgemäßen Auffangeinrichtung und einer Einschleuseinrichtung in perspektivischer Darstellung und
- Fig.7: die Einzelkornsämaschine gemäß Fig. 6 in der Vorderansicht.

Die pneumatische Einzelkornsämaschine weist ein Gehäuse 1 mit einem darin angeordneten Vereinzelungsorgan und zugeordnetem Vorratsbehälter 2 zur Aufnahme von Saatgut auf. Der Einzelkornsämaschine ist ein von einer Kraftquelle angetriebenes Druckgebläse 3 zugeordnet. Der Druckstutzen des Gebläses 3 ist über eine Druckluftleitung mit dem Gehäuse 1 verbunden, so dass das Vereinzelungsorgan auf seiner Außenseite mit Druck zu beaufschlagen ist. Das Vereinzelungsorgan weist in bekannter und nicht dargestellter Weise kreisringförmig angeordnete Vereinzelungsöffnungen auf. Auf der dem Saatgutvorrat des Vorratsbehälters 2 zugewandten Seite der Vereinzelungsöffnungen herrscht ein höherer Druck als auf der anderen Seite der Vereinzelungsöffnungen, also der Vereinzelungsorganinnenseite.

Im Bereich des mit Überdruck beaufschlagten Gehäuses 1, in dem das Vereinzelungsorgan angeordnet ist, ist in der einen Seitenwandung 4 des Gehäuses 1, im seitlichen Bereich des als Vereinzelungstrommel ausgebildeten Vereinzelungsorgans eine Öffnung angeordnet, damit der vorerwähnte Druckunterschied an den Vereinzelungsöffnungen hergestellt werden kann. Aufgrund der Druckdifferenz, die an den im Vereinzelungsorgan angeordneten Vereinzelungsöffnungen herrscht, lagert sich an der Außenseite der Vereinzelungsöffnungen das auszubringende und zu vereinzelnde Saatgut an.

Durch die Öffnung in der Seitenwand 4 des Gehäuses 1 tritt aufgrund des Überdrucks mit Staubpartikeln oder Beizmittelpartikeln vermengte Luft aus.

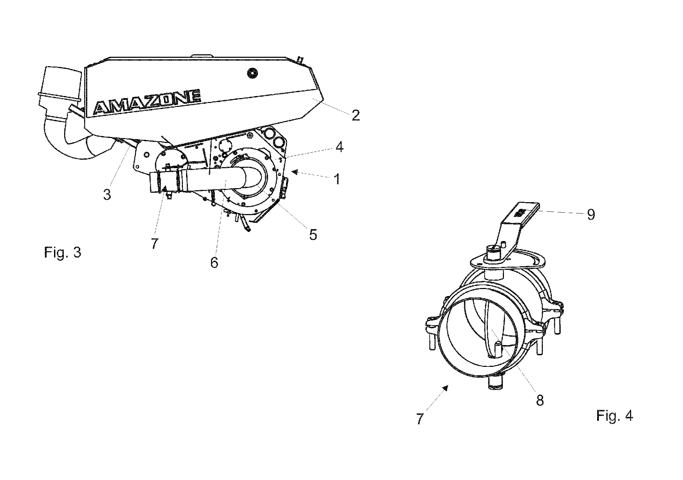

Um diese Luft jetzt aufzufangen ist im Bereich der Seitenwand 4 des Gehäuses 1 vor dieser Öffnung des Gehäuses 1, aus der diese Luft austritt, eine topfartig geformte Auffangeinrichtung 5 angeordnet. Dieser topfartigen Auffangvorrichtung 5 ist jeweils zumindest eine Leitung 6 mit einem einstellbaren als Drosselventil 7 ausgebildeten Drosselelement 7 zugeordnet. Dieses Drosselventil ist klappenartig ausgebildet, wie Fig. 4 zeigt. Durch verstellen der Klappe 8 des Drosselventils 7 über den Hebel 9 lässt sich der Staudruck in der gewünschten Weise einstellen.

Mittels des Drosselventils 7 ist zwischen dem als Vereinzelungsorgan ausgebildeten Dosierorgan und Drosselventil 7 ein Staudruck zu erzeugen. Hierdurch werden die an den Vereinzelungsöffnungen anhaftenden vereinzelten Saatkörner, aufgrund der nicht vollständigen Abdichtung der jeweiligen Vereinzelungsöffnung durch das anhaftende Saatkorn vorbei strömende Luft reduziert. Die Reduzierung der entweichenden "Luft" erfolgt dadurch, dass der Druckunterschied an der jeweiligen Vereinzelungsöffnung durch den entstehenden Staudruck auf der Innenseite der Vereinzelungsöffnung herabgesetzt ist.

Somit kann der Druck im Inneren des Vorratsbehälters gegenüber dem Stand der Technik wirkungsvoll, ohne den Druckunterschied an den Vereinzelungsöffnungen entscheidend erhöhen zu müssen, erhöht werden.

Durch den erhöhten Luftdruck im Vorratsbehälter 2 können die Saatleitungen, durch welche die vereinzelten Saatkörner zu den Säscharen transportiert werden, mit mehr Druckluft auf einem höheren Druckniveau versorgt werden. Hierdurch wird eine verbesserte Saatgutförderung erreicht.

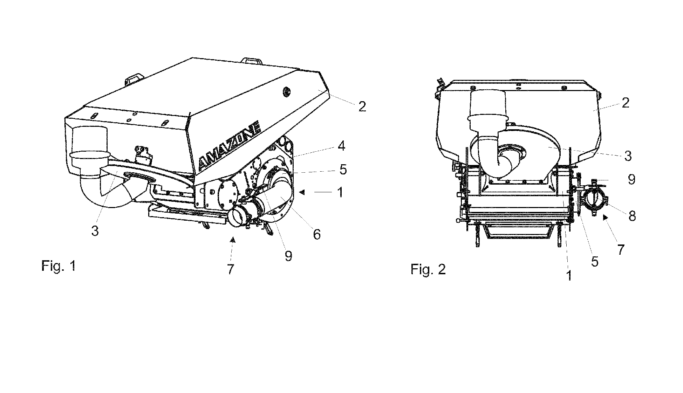

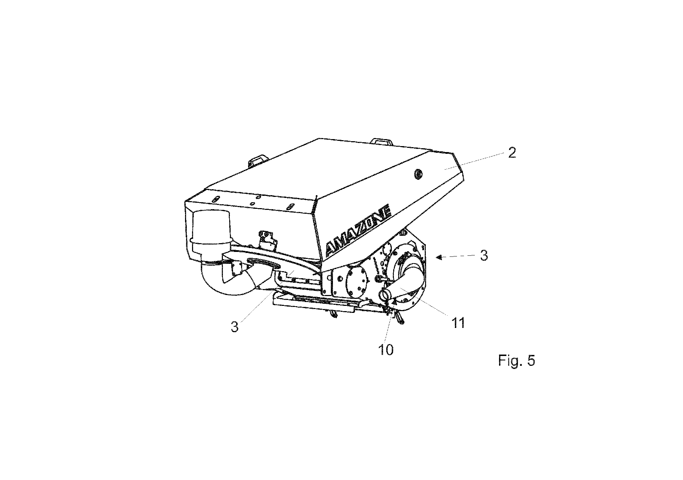

Die Einzelkornsämaschine gemäß Fig.5 unterscheidet sich von der Einzelkornsämaschine gemäß den Fig. 1 bis 4 durch eine andere Ausgestaltung des Drosselelementes. Dieses Drosselelement 10 ist als sich verjüngendes Rohr 11 ausgebildet. Der Staudruck lässt sich hier durch ein nicht dargestelltes, auf dem sich verjüngenden Rohr 11 angeordneten Einschnürband verändern.

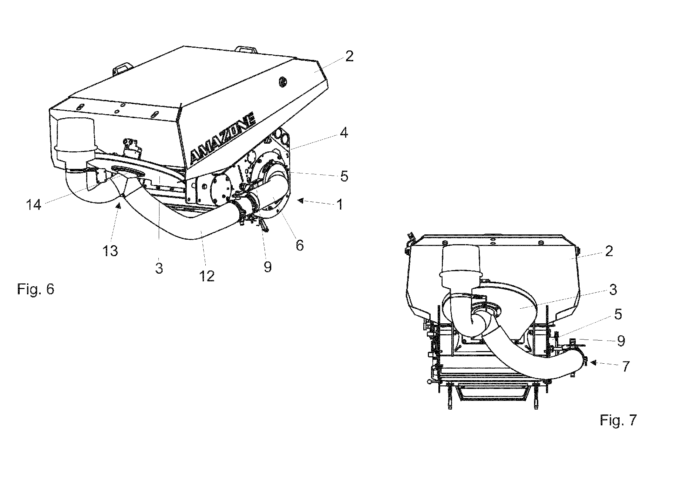

Die Einzelkornsämaschine gemäß Fig.6 und 7 unterscheidet sich von der Einzelkornsämaschine gemäß den Fig. 1 bis 4 dadurch, dass sich an dem Drosselventil 7 eine weitere Leitung 12 anschließt, welche über eine Einschleuseinrichtung 13 in den Saugstutzen 14 des Gebläses 3 einmündet. Somit mündet die Auffangleitung 6 in das pneumatische Fördersystem ein.

In nicht dargestellter Weise ist es auch möglich, dass an dem Hebel 9, über den die Klappe 8 des Drosselventils 7 einstellbar ist, ein motorisches Stellelement angeordnet ist. Über dieses motorische Stellelement, das als Elektromotor ausgebildet ist, kann die Drosselklappe 7 entsprechend eingestellt werden. Hierbei kann der Differenzdruck, das heißt die Einstellung der Drosselklappe 7 auch aktiv geregelt sein, so dass der Staudruck veränderbar ist. Hierbei sind geeignete Sensoren vorhanden, die die jeweiligen Luftdrücke in dem Vorratsbehälter und in den Innenbereich der Trommel ermitteln und an einen Bordrechner übermitteln. Entsprechend eines vorgegebenen Differenzdruckers zwischen den vorgenannten Luftdrücken wird von dem Bordrechner des Elektromotors angesteuert, so dass über die entsprechende Einstellung der Drosselklappe 7 der geforderte Differenzdruck wieder automatisch auf das vorgegebene Niveau eingestellt wird.

## Patentansprüche

1. Pneumatische Sämaschine mit mittels Überdruck durch ein pneumatisches Fördersystem beaufschlagten und in einem Gehäuse angeordneten Dosierorgan, insbesondere Vereinzelungsorgan, wobei aus Öffnungen des Gehäuses aufgrund des Überdrucks, insbesondere mit Staubpartikeln und/oder Beizmittelpartikeln vermengte und/oder verschmutzte Luft austritt, wobei vor den Öffnungen zumindest eine die aus den Öffnungen austretende besagte Luft einfangende und mit zumindest einer Auffangleitung verbundene Auffangeinrichtungen angeordnet ist, **dadurch gekennzeichnet, dass** in der Auffangleitung (6) zumindest ein, vorzugsweise einstellbares Drosselelement (7) angeordnet ist.

2. Pneumatische Sämaschine nach Anspruch 1, **dadurch gekennzeichnet, dass** das Drosselelement als Drosselventil (7) ausgebildet ist.

3. Pneumatische Sämaschine nach Anspruch 2, **dadurch gekennzeichnet, dass** das Drosselventil (7) klappenartig ausgebildet ist.

4. Pneumatische Sämaschine nach Anspruch 1, **dadurch gekennzeichnet, dass** das Drosselelement (10) als verengter Leitungsbereich (11) der Auffangleitung ausgebildet ist.

5. Pneumatische Sämaschine nach zumindest einem der vorstehenden Ansprüche, **dadurch gekennzeichnet, dass** mittels des Drosselelementes (7) ein Staudruck zwischen dem Dosierorgan und dem Drosselventil (7) erzeugbar ist.

6. Pneumatische Sämaschine nach zumindest einem der vorstehenden Ansprüche, **dadurch gekennzeichnet, dass** die Auffangleitungen (6, 12) in das pneumatische Fördersystem über eine Einschleusseinrichtung (13) einmünden.

7. Pneumatische Sämaschine nach zumindest einem der vorstehenden Ansprüche, dass das pneumatische Fördersystem zumindest ein motorisch angetriebenes Gebläse (3) aufweist, das die Auffangleitungen (6, 12)in die Saugseite (14) des Gebläses (3) ausmünden.
